# DEMANDE DE BREVET EUROPEEN

(11) **EP 1 275 753 A1**
(43) Date de publication de la demande: **15.01.2003**
(21) Numéro de dépôt: 02291741.3
(22) Date de dépôt: 11.07.2002
(51) Int. Cl.: C23G 5/00, C23C 28/00

(54) **Procédé de réparation globale d'une pièce revêtue d'une barrière thermique**

(30) Priorité: 12.07.2001 FR 0109258
(71) Demandeur: Snecma Moteurs, 75015 Paris (FR); Snecma Services, 75015 Paris (FR)
(72) Inventeur: Boucard, Bruno Gilles François, 86100 Les Retinières (FR); Fournes, Jean-Paul, 91490 Dannemois (FR); Oberlaender, Guillaume Roger Pierre, 75014 Paris (FR); Malie, André Hubert Louis, 86100 Chatellerault (FR); Manesse, Denis Georges, 86100 Chatellerault (FR); Richin, Catherine Marie-Hélène, 91410 Roinville sous Dourdan (FR)

(57) **Abrégé**

L'invention concerne un procédé de réparation globale d'une pièce (1) revêtue d'une barrière thermique constituée d'une couche externe (5) en céramique colonnaire et d'une sous-couche métallique (3) en alliage aluminoformeur, caractérisé par les étapes suivantes : a) on soumet la pièce métallique (1) à réparer à un traitement thermochimique sous gaz halogéné fluoré pendant un temps suffisant pour éliminer l'aluminium contenu dans la sous-couche (3) et éventuellement les oxydes contenus dans la pièce (1), notamment dans les criques (6), ce qui provoque l'enlèvement de la couche de céramique (5) et la dépassivation de la pièce (1), b) on restaure éventuellement l'intégrité mécanique de la pièce (1) par des procédés de rechargement des criques (6) et de soudage ou brasage, c) on enrichit, en aluminium, la surface de la pièce, et d) on dépose une nouvelle couche (5) de céramique.

Le procédé s'applique notamment aux aubes de turbine à haute pression de la turbomachine.

## Description

L'invention concerne la réparation globale de pièces revêtues d'une barrière thermique et soumises à un environnement hostile, telles que les distributeurs et les aubes mobiles des turbines à haute pression de turbomachines, notamment d'aviation.

L'amélioration continue du rendement des turbines à gaz modernes impose l'utilisation en conception de températures en entrée de turbine toujours plus élevées. Cette tendance a motivé le développement de matériaux toujours plus réfractaires pour constituer les pièces de la turbine HP telles que les aubes et les distributeurs. Pour cela, des superalliages monocristallins avec des fractions. volumiques de phase durcissante gamma prime très élevées ont été développés. Le développement des superalliages ne suffit plus pour accompagner les exigences croissantes en durée de vie des pièces aux hautes températures. C'est ainsi qu'on a vu, plus récemment, l'introduction en service de pièces revêtues d'isolants thermiques pour abaisser la température de métal de ces pièces refroidies par convection interne.

Ces revêtements isolants thermiques, dits barrières thermiques, sont constitués d'une couche externe en céramique à base de zircone stabilisée par de l'oxyde d'yttium ou yttrine, déposée sur une sous-couche métallique de liaison destinée à fournir l'adhérence au revêtement céramique tout en protégeant le métal de la pièce de l'oxydation.

La couche externe en céramique de la barrière thermique est déposée par un procédé consistant à vaporiser le matériau par un faisceau d'électrons, un arc électrique à plasma voire un faisceau laser de puissance, cette vapeur se déposant ensuite sur la pièce et sur les parois de l'enceinte dans laquelle la pièce est exposée aux vapeurs. Lorsque ce procédé est utilisé pour déposer la céramique, cette dernière se présente sous une forme colonnaire qui résiste mieux aux chocs thermiques.

Les sous-couches métalliques de la barrière thermique sont de plusieurs types.

On peut citer d'abord les sous-couches de type MCrAIY (où M désigne le nickel ou le cobalt) qui consiste en une matrice gamma de nickel-cobalt avec en solution du chrome contenant des précipités de bêta NiAl. Ces sous-couches sont déposées soit par évaporation des constituants sous bombardement électronique, soit par projection thermique.

On peut citer ensuite les sous-couches de type aluminiures (NiAl) de structure intermétallique, composés définis à 50 % atomiques de nickel et d'aluminium. Ces revêtements sont obtenus par des procédés thermochimiques d'aluminisation. Dans cette catégorie, les revêtements d'aluminiures modifiés par un métal précieux tel que le platine (Ni₍₁₋ₓ₎PtₓAl) constituent des systèmes de sous-couche de choix. Dans ces systèmes le platine est en insertion dans le sous-réseau du nickel. Le platine est déposé par voie électrolytique avant le traitement thermochimique d'aluminisation. Les revêtements d'aluminiures sont composés d'une couche externe formée par dépôt ainsi que d'une couche plus en profondeur diffusée à l'intérieur du substrat. Le métal précieux est contenu principalement dans la couche externe du revêtement d'aluminiure.

On notera qu'il existe des systèmes de sous-couche MCrAIY dont la surface est modifiée par un métal précieux. Pour cela, un dépôt de platine est déposé par voie électrolytique sur la surface de la couche MCrAIY puis diffusée sur une profondeur d'une dizaine de microns par un traitement thermique sous atmosphère neutre.

Enfin, on notera les systèmes de sous-couches consistant à modifier la surface du superalliage de la pièce en déposant une couche de platine relativement épaisse (> 10 microns) suivi d'un traitement thermique de diffusion.

Tous ces systèmes de sous-couche ont pour dénominateur commun d'être aluminoformeurs, c'est-à-dire qu'ils forment en s'oxydant un film d'alumine protecteur adhérent et isolant le métal de l'environnement oxydant. Le film d'alumine formé par les sous-couches a une vocation de couche de colle du revêtement céramique, et une fonction de protection du substrat contre l'oxydation.

L'addition de métal précieux tel que le platine aux revêtements protecteurs et aux sous-couches de barrière thermique a pour effet d'améliorer la qualité de la couche d'alumine formée et de promouvoir son adhérence sur le métal. L'addition de platine induit cependant un surcoût significatif.

Des traitements thermiques permettent une diffusion de métal entre la sous-couche et le substrat sur lequel il est déposé. Il se crée ainsi une couche diffusée à l'interface entre la sous-couche et le substrat.

Les aubes fixes et mobiles des turbines à haute pression des turboréacteurs en particulier sont soumises à des conditions extrêmement sévères, de températures et de variations de température, ainsi qu'à des agressions chimiques ou à des impacts par des particules ingérées par le moteur. Certaines zones de ces aubes peuvent s'abîmer, notamment les bords d'attaque et les bords de fuite. Il peut se produire des criques dans la pièce, des disparitions locales de la couche externe, voire de la sous-couche, entraînant des oxydations de la pièce. Ces détériorations peuvent nécessiter une réparation totale de la pièce, qui consiste à enlever la barrière thermique ancienne, à nettoyer la pièce, la reconstituer et réédifier une nouvelle barrière thermique, du fait du coût élevé d'une pièce neuve.

Pour réparer une pièce telle qu'un distributeur de turbine revêtu d'une barrière thermique, il est connu de devoir décaper le revêtement en céramique, puis la sous-couche métallique. Il faut ensuite désoxyder la pièce par un traitement thermochimique sous atmosphère halogénée qui a pour propriété de nettoyer l'intérieur des criques avant brasage. La pièce peut ensuite être réparée par une technique de soudage et/ou brasage. Une fois la pièce rechargée et remise à la côte par un procédé d'usinage par enlèvement de matière, par exemple avec une bande abrasive, une meule, etc. selon la forme de la pièce, on réédifie la sous-couche métallique puis la couche externe en céramique.

L'enlèvement de la barrière thermique est classiquement réalisé par sablage. L'opération de sablage est une opération agressive à la fois vis-à-vis de la couche en céramique et de la sous-couche. L'enlèvement de la couche en céramique conduit à l'enlèvement partiel de la sous-couche. Il faut veiller à arrêter l'opération de sablage suffisamment tôt pour ne pas enlever totalement la sous-couche et entamer ainsi le substrat. Le restant de la sous-couche est ensuite enlevé par dissolution chimique en bain acide. Cette opération est délicate car elle amène à la dissolution de la couche diffusée du revêtement d'aluminiure et conduit effectivement à la diminution des épaisseurs de paroi de la pièce.

Les techniques d'enlèvement des barrières thermiques sont donc fastidieuses et non optimisées car :
- elles conduisent à diminuer les épaisseurs de toile des pièces, le terme 'toile' signifiant une paroi mince d'une pièce,
- elles nécessitent au moins deux opérations, l'une pour la couche externe en céramique, et l'autre pour la sous-couche,
- si la sous-couche concernée contient un métal précieux, ces pratiques mènent à le perdre purement et simplement avec l'élimination de la sous-couche.

L'opération de réédification de la sous-couche nécessite donc de déposer à nouveau le métal précieux puis à aluminiser la pièce avant de déposer la couche en céramique.

Le brevet américain 5,614,054 décrit un procédé d'enlèvement de barrière thermique qui consiste à chauffer la pièce revêtue dans une atmosphère halogénée. Ce brevet limite seulement l'application du procédé à l'enlèvement de la couche céramique, sans suggérer qu'on puisse continuer le procédé pour traiter la sous-couche et les criques éventuelles.

Le brevet américain 5,728,227 nous enseigne une technique d'enlèvement de revêtements protecteurs d'aluminiures diffusés consistant à ablater mécaniquement la couche supérieure et à enlever l'aluminium de la couche diffusée en chauffant la pièce en présence d'une atmosphère halogénée. Cette technique d'enlèvement de revêtements d'aluminiures, appliquée à l'enlèvement des sous-couches de barrière thermiques, permet effectivement d'éviter la diminution des épaisseurs de toile des pièces. Elle complique l'opération d'enlèvement de la sous-couche dans la mesure où deux opérations, l'une mécanique, l'autre thermochimique, sont nécessaires pour enlever la sous-couche. Enfin, dans le cas d'une sous-couche contenant du métal précieux, cette technique mène à la perte du métal précieux qui, rappelons-le, est contenu principalement dans la couche externe de la sous-couche.

Ainsi, les procédés actuels de réparation globale d'une pièce revêtue d'une barrière thermique constituée d'une couche externe en céramique colonnaire et d'une sous-couche en alliage aluminoformeur comporte au moins les sept étapes suivantes :
1. L'enlèvement de la couche externe en céramique ;
2. L'enlèvement de la sous-couche métallique ;
3. La dépassivation de la pièce qui consiste à enlever des oxydes, des composés souffrés, etc. qui se forment à chaud au contact des gaz de combustion, afin d'avoir un métal propre et apte à être soudé. Une bonne dépassivation donne à la surface de la pièce un pouvoir mouillant qui permet une bonne pénétration de la brasure à l'intérieur des criques et une bonne adhérence des brasures et soudures;
4. La réparation des criques éventuelles par apport de matière, par exemple par dépôt de poudre de brasure puis passage au four. Lorsque la pièce est ébréchée ou érodée, par exemple au sommet, au bord d'attaque ou au bord de fuite des aubes, on reconstitue la forme de la pièce par rechargement de matière;
5. La reconstitution de la sous-couche par dépôt des matériaux la constituant : NiAl, MCrAIY, Pt, etc. et traitement de diffusion au four ;
6. L'aluminisation diffusion de la sous-couche ;
7. Le dépôt de la couche externe en céramique de la barrière thermique.

Il est à noter que l'enlèvement de la sous-couche métallique entraîne la perte des métaux précieux qui y étaient contenus et des risques de diminution de l'épaisseur de toile de la pièce.

Ces risques de diminution de l'épaisseur de toile sont tellement élevés que la même aube de turbine ne peut être réparée qu'un nombre très limité de fois par les techniques actuelles, parfois deux fois seulement lorsque la toile est très mince.

Un premier but de l'invention est de proposer un procédé de réparation qui évite la diminution des épaisseurs de la toile de la pièce.

Un second but de l'invention est de réduire le nombre d'opérations nécessaires pour réparer une pièce revêtue d'une barrière thermique.

Un troisième but de l'invention est de proposer un procédé qui évite l'élimination des métaux précieux de la sous-couche métallique et la nécessité d'un apport ultérieur de métal précieux.

Le procédé selon l'invention est caractérisé par les étapes suivantes :
a) on soumet la pièce à réparer à un traitement thermochimique sous gaz halogéné fluoré pendant un temps suffisant pour éliminer l'aluminium contenu dans la sous-couche et les éventuels oxydes et composés souffrés présents à la surface de la pièce et dans les criques, ce qui provoque l'enlèvement de la couche de céramique et la dépassivation de la pièce,
b) on restaure l'intégrité mécanique de la pièce par des procédés de réparation des criques éventuelles par apport de matière ,
c) on enrichit en aluminium la surface de la pièce si nécessaire, et
d) on dépose une nouvelle couche de céramique.

Au début de la première étape, le gaz halogéné fluoré pénètre dans la céramique par les porosités, et attaque alors l'yttrine de la céramique, ce qui augmente la porosité et favorise la pénétration du gaz halogéné fluoré. La poursuite du traitement thermochimique sous gaz halogéné fluoré entraîne l'élimination de l'aluminium de la sous-couche métallique et de la couche diffusée à la périphérie du substrat. L'élimination de l'aluminium au cours de la première étape entraîne la disparition des liaisons entre la sous-couche métallique et les pieds de colonnes de la couche externe en céramique, ce qui favorise un écaillage de la couche externe en céramique lors d'un refroidissement ultérieur de la pièce. Il ne reste dans la sous-couche que les métaux précieux, nickel et platine et cette sous-couche se transforme en une éponge métallique. Dans les zones où la pièce comporte des criques, les oxydes métalliques sont également éliminés par le gaz halogéné fluoré. L'attaque thermochimique par le gaz halogéné fluoré permet une dépassivation efficace. Toutefois, cette attaque ne doit pas être poussée trop loin car elle provoquerait alors une dégradation intergranulaire du métal de la pièce qui favoriserait l'apparition de nouvelles criques

Le premier but est atteint par le fait que la pièce est préparée chimiquement au rechargement de matière par soudage ou brasage, sans enlèvement de la matière de la pièce.

Le second but est atteint par le fait que la pièce est préparée au rechargement de matière par soudage ou brasage en une seule opération de traitement thermochimique sous gaz halogéné fluoré. On comprend en effet que l'aluminium de la sous-couche est enlevé par l'attaque thermochimique du gaz fluoré passant à travers la couche de céramique. On comprend également que la pièce est dépassivée par l'attaque thermochimique du gaz fluoré passant simultanément à travers la couche de céramique et la sous-couche rendue poreuse suite à l'enlèvement de l'aluminium la constituant.

Le second but est également atteint par le fait que les opérations de reconstitution de la sous-couche sont supprimées, seule restant l'opération d'aluminisation.

Il n'est donc pas nécessaire d'enlever la sous-couche pour procéder au rechargement de matière par soudage ou brasage. Il suffit d'enlever l'aluminium la constituant, ce métal étant connu pour être difficile à souder. On constate que, pendant le soudage ou le brasage, le métal rapporté pénètre dans la sous-couche rendue poreuse et se lie directement au métal constituant la pièce.

Il ne suffit pas d'avoir une attaque plus importante que dans les brevets précités. L'attaque thermochimique doit être suffisante pour dépassiver correctement la surface de la pièce sous la barrière thermique ainsi que les parois des criques, mais elle doit cependant rester limitée pour ne pas provoquer des dégradations intergranulaires du métal de la pièce. L'invention enseigne que ce compromis est possible. L'homme du métier établira cas par cas le bon dosage de l'attaque thermochimique, en fonction de la barrière thermique et du métal de la pièce, par des essais de laboratoire.

Le troisième but est atteint par le fait que tous les matériaux constituant la sous-couche, notamment les métaux précieux tels le platine ou le palladium, à l'exception de l'aluminium et éventuellement de l'yttrium, restent en place.

A la fin de la première étape, les criques éventuelles sont nettoyées et on les recharge, à la deuxième étape, par les techniques de soudage ou de brasage.

Avant de réédifier la barrière thermique, il suffit d'enrichir la surface de la pièce en aluminium. Cet aluminium remplit les cavités de l'éponge métallique et permet de déposer une nouvelle couche de céramique. Un apport extérieur d'aluminium est nécessaire dans le cas des sous-couches de NiAl car elles ont une forte proportion de AI. Dans le cas des MCrAIY qui ont, au contraire, une proportion beaucoup plus faible de Al, il peut arriver que l'aluminium qui remonte du substrat par diffusion soit suffisant.

Avantageusement, on enrichit en aluminium la surface de la pièce par un procédé thermochimique d'aluminisation en caisse ou en phase vapeur.

De préférence, avant d'enrichir en aluminium la surface de la pièce, on procède à une étape de consolidation de l'éponge métallique résiduelle résultant du traitement thermochimique sous gaz halogéné fluoré de la sous-couche métallique. Cette consolidation est réalisée par exemple par un sablage léger, c'est-à-dire suffisant pour réduire les porosités de la sous-couche par compression mais pas trop fort afin de ne pas enlever la sous-couche.

Le procédé selon l'invention s'applique notamment pour la réparation d'éléments de turbine à haute pression de turbomachine, réalisés en superalliage à base de nickel.

D'autres avantages et caractéristiques de l'invention ressortiront à la lecture de la description suivante faite à titre d'exemple et en référence aux dessins annexés dans lesquels :
- la figure 1 montre une portion d'une pièce saine revêtue d'une barrière thermique de type colonnaire,
- la figure 2 montre le procédé de nettoyage de la pièce pour enlever l'aluminium et les oxydes des criques de la pièce,
- la figure 3 montre en coupe une portion de pièce après le procédé de nettoyage et l'enlèvement de la couche en céramique,
- la figure 4 montre une crique et son environnement après rechargement de brasure, et
- la figure 5 montre un secteur d'aubes de redresseur de turbine.

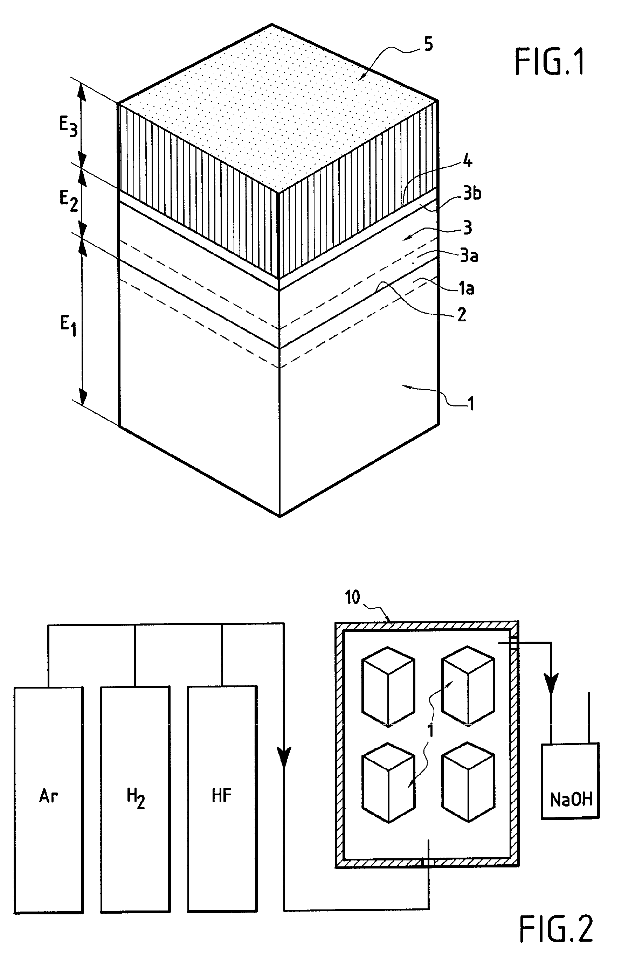

La figure 1 montre une portion d'une pièce saine 1 d'un superalliage à base de nickel d'épaisseur E1, revêtue sur sa face extérieure 2 d'une sous-couche métallique 3 en alliage métallique alumino-formeur, dont la face extérieure 4 est elle-même revêtue d'une couche externe 5 en céramique colonnaire, ayant une épaisseur E3.

La pièce 1 est par exemple un élément d'un distributeur de turbine à haute pression d'un turboréacteur comportant plusieurs aubes fixes, ou une aube mobile de ce type de turbine.

Le rôle de la sous-couche métallique 3 est de protéger la pièce 1 contre l'oxydation et contre la corrosion susceptibles d'être provoquées par les gaz chauds et agressifs circulant dans la turbine. Son rôle est également de permettre l'accrochage de la couche externe 5 en céramique.

La sous-couche est réalisée par dépôt de nickel ou d'un alliage MCrAIY dans lequel M désigne les métaux de la pièce tels le nickel ou le cobalt. Ce dépôt est effectué par projection avec une torche plasma ou par le procédé appelé EB-PVD, qui consiste en une déposition en phase vapeur sous bombardement électronique. La sous-couche est ensuite aluminisée par cémentation dite 'en caisse' ou 'en phase gazeuse'. La sous-couche peut également comporter des métaux précieux tels le platine Pt, le palladium Pa déposés par électrochimie. Au moyen de traitements thermiques, du métal, notamment du nickel, diffuse de la pièce 1 vers la sous-couche 3 et de l'aluminium diffuse de la sous-couche 3 vers la pièce 1. La face extérieure 2 de la pièce 1 est à l'interface entre une zone externe 1a de la pièce 1 en superalliage, dans laquelle de l'aluminium de la sous-couche 3 a pu diffuser, et une zone interne 3a de la sous-couche 3 dans laquelle du métal du substrat 1 a pu diffuser. La sous-couche 3 présente en outre près de la face extérieure 4 une pellicule d'alumine 3b imperméable à l'oxygène et assurant l'accrochage de la couche externe 5 en céramique.

La couche externe 5 est élaborée par évaporation sous bombardement électronique d'un oxyde à base de zircone stabilisée, partiellement ou complètement par addition d'oxyde d'yttrium.

L'épaisseur E3 de la couche externe 5 est comprise entre 200 et 300 micromètres, typiquement 300 micromètres.

La pièce 1 ainsi revêtue de la sous-couche métallique 3 et de la couche externe 5 en céramique, peut subir des dégradations importantes en fonctionnement, dues aux chocs thermiques, à l'écaillage de la couche externe 5, à l'oxydation de la sous-couche 3, et à l'érosion par impact des particules. Il peut également se produire des fissures ou des criques dans la sous-couche métallique 3 et le substrat de la pièce 1. Les parois des criques sont alors soumises à une oxydation et à une corrosion importante. La pièce 1 doit alors être réparée, et les criques doivent être rechargées en métal, après nettoyage.

L'invention propose un procédé pour éliminer la couche externe de céramique 5, éliminer le film d'alumine contenu dans la sous-couche 3 ainsi que l'aluminium contenu dans cette sous-couche 3 et dans la zone externe 1a de la pièce 1, et éliminer les oxydes des criques en une seule étape.

Pour ce faire, on expose la pièce 1 à un traitement thermochimique sous gaz halogéné fluoré pendant un temps suffisant pour éliminer la totalité de l'aluminium, et les oxydes, mais limité pour éviter une attaque intergranulaire du substrat 1.

Le gaz fluoré passe entre les colonnes de céramique tout en dégradant cette céramique, ce qui favorise encore la pénétration, atteint et dissout la pellicule 3b d'alumine. Ceci permet de séparer ultérieurement la couche externe 5 de la sous-couche 3 lors du refroidissement de la pièce 1 après traitement. Le gaz fluoré atteint alors la sous-couche 3 et dissout également l'aluminium et l'alumine contenus dans la sous-couche 3.

L'élimination progressive de l'aluminium et de l'alumine crée des porosités dans la sous-couche 3 qui permettent au gaz fluoré de pénétrer davantage en profondeur dans cette sous-couche 3, mais laisse en place les métaux précieux tels que le nickel et le platine qui forment alors une couche poreuse perméable au gaz fluoré. Enfin, le gaz fluoré passe à travers la sous-couche 3 devenue poreuse et transformée en éponge métallique, atteint le substrat 1, pénètre dans les criques et dissout les oxydes à la surface du substrat et des parois des criques. Ainsi, on nettoie le substrat 1 et les criques à travers la barrière thermique, sans devoir l'enlever en totalité.

Par exemple, la pièce est un secteur d'aubes de redresseur en NTa8CKWA de structure monocristalline, ce superalliage de base nickel étant communément appelé AM1. La barrière thermique comporte une sous-couche de 60 micromètres en aluminure de nickel NiAl enrichie de platine Pt. La couche de céramique colonnaire de zircon enrichie de 8% en masse d'yttrine ZrO₂ + Y₂O₃ a une épaisseur variant entre 100 et 150 micromètres selon l'endroit sur la pièce. L'attaque thermochimique s'effectue à 975°C pendant 1h30 avec du HF dilué à 10% dans du H₂.

La figure 2 montre une installation de nettoyage des pièces 1 disposées dans une enceinte étanche 10 alimentée en un gaz halogéné fluoré contenant de l'hydrogène, de l'acide fluorhydrique, et un gaz neutre tel que l'argon. Au lieu de provenir d'acide fluorhydrique, le fluor peut également provenir de la décomposition du téflon ou de fluorure d'ammonium. Selon les circonstances, on peut rajouter de l'hydrogène H₂ afin de réduire les traces d'oxygène qui pourraient être présentes dans le four pendant le traitement thermochimique. Les pièces 1 sont soumises à une température voisine de 1000°C au cours du traitement de nettoyage.

Après le nettoyage des pièces 1, la céramique se détache pendant le refroidissement des pièces à la fin du cycle thermique. A noter qu'un sablage léger est parfois nécessaire pour enlever les lambeaux de céramique qui sont restés en place.

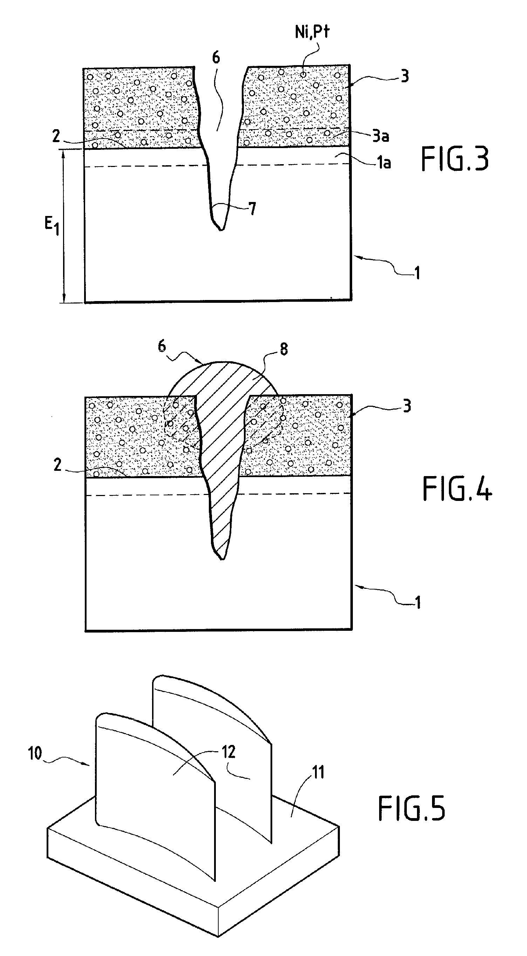

La figure 3 montre l'aspect d'une portion d'une pièce 1 après l'opération de nettoyage par un gaz halogéné fluoré et l'enlèvement de la couche externe 5 en céramique. La sous-couche 3 comporte uniquement des métaux précieux, tels que le nickel et le platine et est poreuse. La couche 3b d'alumine a disparu. La référence 6 désigne une crique dont les parois 7 ont été nettoyées.

On détecte ensuite les criques 6 et on les répare par une méthode de rechargement par brasage et diffusion. Cette méthode consiste à déposer la brasure sur les criques 6, puis à fondre les constituants de la brasure à la flamme, et de préférence à l'arc électrique. On procède ensuite à la diffusion avec le métal du substrat 1 par traitement thermique.

La figure 4 montre l'environnement de la crique 6 après l'opération de rechargement. La crique 6 est remplie de brasure qui atteint le substrat 1 à travers la sous-couche poreuse 3 dans les zones voisines de la crique 6. Le dôme 8 de la brasure est ensuite arasé à la ponceuse à bande par exemple.

L'étape suivante consiste à densifier l'éponge 3 formée des métaux précieux par un sablage léger. Cette opération de densification est optionnelle. La densification permet de réduire la porosité résiduelle qui autrement affaiblirait la sous-couche 3 et favoriserait son oxydation. Le sablage sera avantageusement effectué par projection de microbilles qui permettent une meilleure compression de la sous-couche 3 sans arrachement de la surface.

La troisième étape consiste à aluminiser la sous-couche 3 à l'état poreux ou densifié. Le dépôt d'aluminium se fait par le procédé de cémentation en caisse ou en phase vapeur. Dans le cas de l'aluminisation, on utilise un activateur, tel un fluorure d'ammonium ou un chlorure d'ammonium qui constitue avec l'aluminium un composé intermédiaire permettant le dépôt. Sous l'effet de la chaleur, l'aluminium déposé sur la sous-couche spongieuse 3 diffuse à travers les pores, ce qui permet de constituer directement l'aluminiure. A ces températures, l'acide chlorhydrique ou fluorhydrique a un fort pouvoir réducteur. Un nouveau traitement thermique permet de réaliser la pellicule 3a d'alumine.

La dernière étape du procédé consiste à créer la nouvelle couche externe en céramique, comme s'il s'agissait d'une pièce 1 neuve revêtue d'une sous-couche 3 d'aluminiure, ou de MCrAIY. La céramique est déposée de préférence par évaporation sous bombardement électronique afin de recréer une céramique colonnaire.

La figure 5 montre un secteur 10 d'aubes de redresseur de turbine, constitué d'une embase 11 et de quelques pales 12. L'embase 11 est recouverte d'une barrière thermique en MCrAIY + céramique stratifiée alors que les pales 12 sont recouvertes d'une barrière thermique en NiAl + céramique colonnaire déposée en phase vapeur par le procédé dit EB-PVD (déposition en phase vapeur de poudre par bombardement électronique). L'enlèvement total de la barrière thermique par sablage est impossible sur ce type de pièce sans enlever du métal du substrat. Le procédé est ici particulièrement intéressant, et l'attaque fluorée permet d'enlever en une seule opération les deux types de barrière thermique.

## Revendications

1. Procédé de réparation globale d'une pièce (1) revêtue d'une barrière thermique constituée d'une couche externe (5) en céramique et d'une sous-couche métallique (3) en alliage aluminoformeur,
**caractérisé par** les étapes suivantes :
a) on soumet la pièce métallique (1) à réparer à un traitement thermochimique sous gaz halogéné fluoré pendant un temps suffisant pour éliminer l'aluminium contenu dans la sous-couche (3) et les éventuels oxydes et composés souffrés présents à la surface de la pièce (1) et dans les criques (6), ce qui provoque l'enlèvement de la couche de céramique (5) et la dépassivation de la pièce (1),
b) on restaure l'intégrité mécanique de la pièce (1) par des procédés de réparation des criques (6) éventuelles par apport de matière,
c) on enrichit, en aluminium, la surface de la pièce, si nécessaire, et
d) on dépose une nouvelle couche (5) de céramique.

2. Procédé selon la revendication 1, **caractérisé par le fait que** l'on enrichit en aluminium la surface de la pièce par un procédé thermochimique d'aluminisation en caisse.

3. Procédé selon la revendication 1, **caractérisé par le fait que** l'on enrichit, en aluminium, la surface de la pièce par un procédé thermochimique d'aluminisation en phase vapeur.

4. Procédé selon l'une quelconque des revendications 1 à 3, **caractérisé par le fait qu'**avant l'étape d'enrichissement en aluminium de la pièce, on procède à une étape de consolidation de l'éponge métallique résiduelle résultant du traitement thermochimique sous gaz halogéné fluoré de la sous-couche métallique.

5. Procédé selon la revendication 4, **caractérisé par le fait que** l'on consolide l'éponge métallique résiduelle par un sablage léger.

6. Procédé selon l'une quelconque des revendications 1 à 5, **caractérisé par le fait que** la pièce à réparer est un élément (10) d'une turbine à haute pression d'une turbomachine.

7. Procédé selon la revendication 6, **caractérisé par le fait que** ledit élément de turbine (10) est réalisé en superalliage à base de nickel.

8. Procédé selon l'une des revendications 6 ou 7, **caractérisé par le fait que** l'élément de turbine (10) est revêtu d'une barrière thermique en NiAl + céramique colonnaire.

9. Procédé selon l'une des revendications 6 ou 7, **caractérisé par le fait que** l'élément de turbine (10) est revêtu d'une barrière thermique en MCrAIY + céramique stratifiée.

10. Procédé selon l'une des revendications 6 ou 7, **caractérisé par le fait que** l'élément de turbine (10) est revêtu d'une barrière thermique en partie en NiAl + céramique colonnaire et en partie en MCrAIY + céramique stratifiée .
